# EUROPEAN PATENT SPECIFICATION

(11) **EP 3 836 055 B1**
(45) Date of publication and mention of the grant of the patent: **21.05.2025**
(21) Application number: 20382655.7
(22) Date of filing: 20.07.2020
(51) Int. Cl.: G06Q 10/0833, G06Q 50/40, B64F 1/36

(54) **INTEGRATED SYSTEM FOR INDIVIDUALIZED DELIVERY OF LUGGAGE / BAGGAGE AT AIRPORTS / TRAIN STATIONS, BUSES / PORTS (B2P = BAGGAGE TO PAX)**
INTEGRIERTES SYSTEM FÜR DIE INDIVIDUALISIERTE LIEFERUNG VON GEPÄCK / GEPÄCK AN FLUGHAFEN / ZUGSTATIONEN, BUSEN / HAFEN (B2P) = GEPÄCK ZU PAX)
SYSTÈME INTÉGRÉ POUR LA LIVRAISON INDIVIDUALISÉE DE BAGAGES / BAGAGES AUX AÉROPORTS / GARE, AUTOBUS / PORTS (B2P = BAGAGES À PAX)

(43) Date of publication of application: 16.06.2021
(62) Divisional of application: 20211330.4
(73) Proprietor: Gesnaer Consulting SLNE, 28042 Madrid (ES)
(72) Inventor: PÉREZ GIL DE LA SERNA, Juan Manuel, 28042 Madrid (ES)
(74) Representative: Lehmann Novo, Maria Isabel

(56) References cited:
- EP-A1- 2 772 440
- EP-B1- 2 772 440
- US-A1- 2003 141 411
- US-A1- 2017 362 033

## Description

### SUMMARY

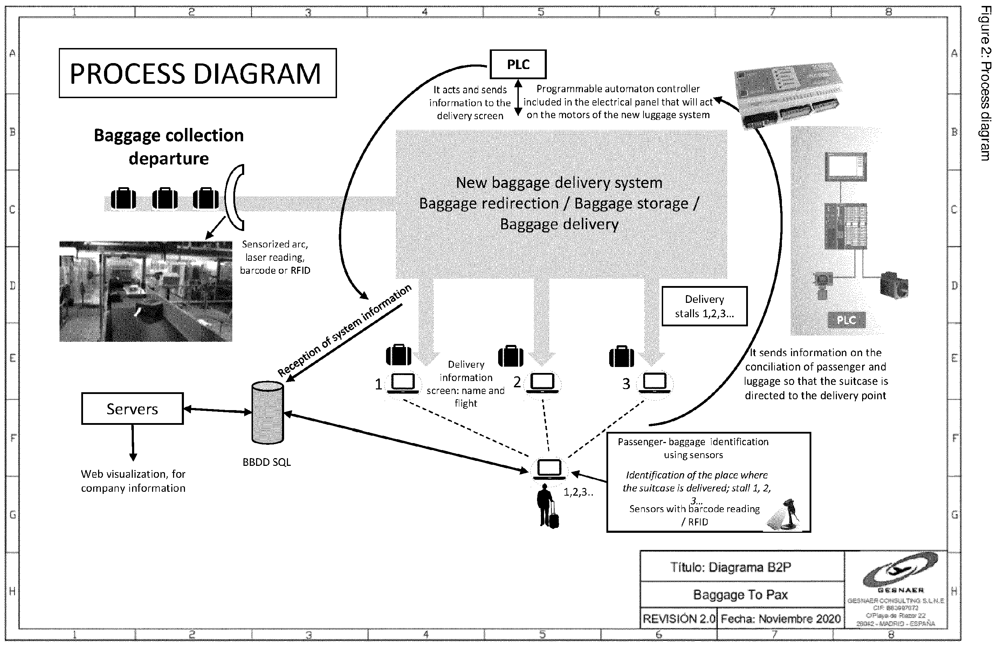

New ***integrated and modular*** collection system of packages/baggage that allows the delivery to be made individually to each passenger in the package/luggage delivery room of any airport or transport terminal, including train stations, bus stations, ports, etc. Previously, the passenger must be identified by an interactive screen stand, a mobile app or a tablet device. The system will guide the user to a delivery point where the package/luggage will be available for pick-up. Relation between packages/luggage and passenger is established automatically. Figure 2 shows a diagram of the process and the integration of the different modules into which it is divided.

### DESCRIPTION

### TECHNICAL SECTOR

The technical field of the invention is the airport and transportation sector. The system, object of the invention, can be used in several areas of the transportation sector, not being limited exclusively to the field of handling packages/baggage at airports. It can also be used in train stations, bus stations, ports, etc.

### OBJECT OF THE INVENTION

The invention is aimed to be used in airports or other transport terminals including train stations, bus stations, ports, etc., but it is possible to use it in other places where it is convenient or necessary to establish the relationship package/passenger luggage automatically.

The initial objective of the invention is to improve the delivery of packages/baggage at airports, due to the lack of technology and deficiencies in the current system. Once the invention is developed, it has been studied that the implementation in other transport systems such as train stations, bus stations, ports, etc. is viable.

Below there is a generalized description of the purpose of this invention within the airport environment::
- Delivery of the package/luggage individually to each passenger in the delivery hall of any airport, after the passenger has identified themselves correctly. Relation of package/baggage to passenger is established automatically.
- Respond to the current limitations shown in the aviation sector, since in all airports there are problems derived from the baggage delivery system at the baggage claim area. These problems mainly consist in:
   ∘ Congestion
   ∘ Danger of theft of luggage
   ∘ Waiting time
- Therefore, the purpose is to reduce one of the greatest concerns of passengers when flying: baggage claim; avoiding baggage loss, theft and confusion and reducing space in baggage claim rooms.
- This new system would lead to a reduction in claims, an increase in passenger happiness and safety, and would allow an exact calculation of baggage claim times from the moment the plane stops in the parking slot, with the airport manager being able to improve its management by detecting faults.
- Also given the current COVID-19 pandemic, the disinfection of all luggage before delivery to the passenger can also be offered as an option.

Regarding specific purposes, the following can be mentioned:
- Installation of a set of delivery points that can be a box in which the luggage is stored individually and accessed by passengers using an identification code.
- Design of a new internal luggage control system.
- Design of the package/luggage-passenger identification system.
- Design of the control and information system to inform supervisors and passengers about baggage delivery and maintenance.

### BACKGROUND OF THE INVENTION

Since June 2018, all airlines belonging to the International Air Transport Association (IATA) must apply IATA Resolution 753, related to the tracking and traceability of luggage.

This requires airlines to keep track of the condition and situation of the suitcases from the moment the passenger checks in his luggage at the airport counter until the suitcase is returned to the passenger. To ensure traceability, airlines will have to control them at four main points: during check-in, during the loading on the plane, during the transfer to the baggage distribution area once they have landed and during the return to the passenger.

With this regulation, the aim is to prevent and reduce the loss of luggage, delivery times and fundamentally the individualized delivery of luggage to each passenger. This system does not exist in any airport in the world to date.

With current systems, congestion in the baggage claim area is a common phenomena, while a passenger waits for his suitcase to be removed, it can be stolen, without any supervision at most airports. According to SITA, 5.57 pieces of luggage were lost for every 1,000 passengers in 2017. Badly managed suitcases -which include those lost, damaged and lost indefinitely- costed the industry 2.3 billion dollars (1975 M €) in that year. In addition to this problem related to safety and the over-cost that it produces for the sector, there is a considerable amount of time wasted and situations of confusion among passengers, in the baggage claim area, due to the homogeneous or equal design of many of the suitcases.

An Automatic Baggage Handling System or SATE is a baggage management system used at airports. It is a network of conveyor belts which, through an automated system, move luggage within the airport system. The baggage arrival system at the final destination consists of the following subsystems; Input subsystem (optional if direct carriage is used on carts), Sorting subsystem (optional if direct carriage on carriages is used), Transportation subsystem (fast belts, carriage trains), and Output subsystem (baggage claim area for collecting luggage).

The subsystem where the invention fits is the output subsystem. Currently, in regards to the delivery of luggage to passengers, the current system follows a simple scheme where technology has not yet been introduced: the suitcases arrive at a conveyor belt, which consists of a belt that rotates, where passengers collect the luggage manually by visually identifying them. With this type of output system, any person can access any suitcase, producing congestion and confusion issues which can result in taking the wrong suitcase.

Our device will replace the current conveyor belt allowing only the collection of the package/luggage to the right owner. The B2P will help solve the current problems, both from the point of view of passengers and airlines because their goal is to receive the packages/luggage and deliver them to each passenger.

Patent US2017362033, discloses a computer-implemented method, system and computer program product for distributing luggage among a plurality of outlet ports of a luggage distribution unit. The method includes associating a passenger key and luggage identification (ID) service of a luggage unit, and assigning, using a processor system, the luggage ID device to a dispensing unit based at least in part on a determination of a desired distribution of luggage units among a plurality of outlet ports. Therefore, it is the passenger who decides at which port of delivery he/she wants to pick up his/her luggage. According to the disclosure, this outlet port selection is made at the airport of origin. Upon arrival at the baggage claim hall at the airport of arrival, the passenger searches and proceeds to the baggage claim port he/she selected at the airport of origin, and collects his/her baggage.

In the method proposed by US2017362033, the passenger is supposed to configure where he/she wants to pick up the luggage on arrival at the destination according to his/her will. In the claimed method, the system automatically assigns a luggage to an individual box, and the passenger accesses this box after having correctly identified himself. Besides, the system itself indicates to the passenger via the interactive screen the box to which they have to go, thus reducing the time of arrival at the box and making the system more efficient.

Another important disadvantage of US2017362033 is that at the time of pick-up there may be long queues that force passengers to change the previously chosen drop-off point. It may well happen that several passengers have selected the same delivery port. In the present application, the system automatically assigns a suitcase to a box, and in this way, unlike in the US patent where passengers decide where to pick up their luggage, the distribution of the suitcases is carried out automatically, occupying the delivery points that are emptied first, increasing the efficiency of the system and avoiding queues in the luggage collection area.

Another technical differentiating feature is the delivery of the packages/luggage by granting access to the individual box to the passenger only after successful identification. In the solution proposed in US2017362033 the passenger will choose an outlet port to pick up his luggage. But the drop-off ports are simply open unloading ramps. In other words, if several passengers had selected the same outlet port, they could all coincide at the same outlet port and cause the problems that the present invention aims to avoid (queues, mistakes, theft, etc.).

The device described in US2017362033 has within it a conveyor through which the luggage is moved. Unlike this conventional solution, the claimed system has two levels, with a central lane on each, and linked in such a way that the suitcases run uninterruptedly through the system by means of ramps/lifts that connect two levels. This system allows the suitcases to recirculate inside the system until they are identified by the app developed and assigned a closed and individual box that only opens when the passenger is in front of the box to pick up their suitcase, so there are no traffic jams or stops in the system.

Furthermore, the system contains a waiting position before entering a box in which the bags are stored before moving to the pick-up box referred to as spaces or storage belts. The bags are kept in these waiting spaces until the adjacent Box is empty, and can then be moved to the empty Box. There is an increased capacity of the system due to the two rows of boxes and these designed spaces or storage belts from which, in a motorized and automated way, they can return to the central lane "central warehouse" and recirculate the suitcase to automatically reassign another box.

### DESCRIPTION OF THE DRAWINGS

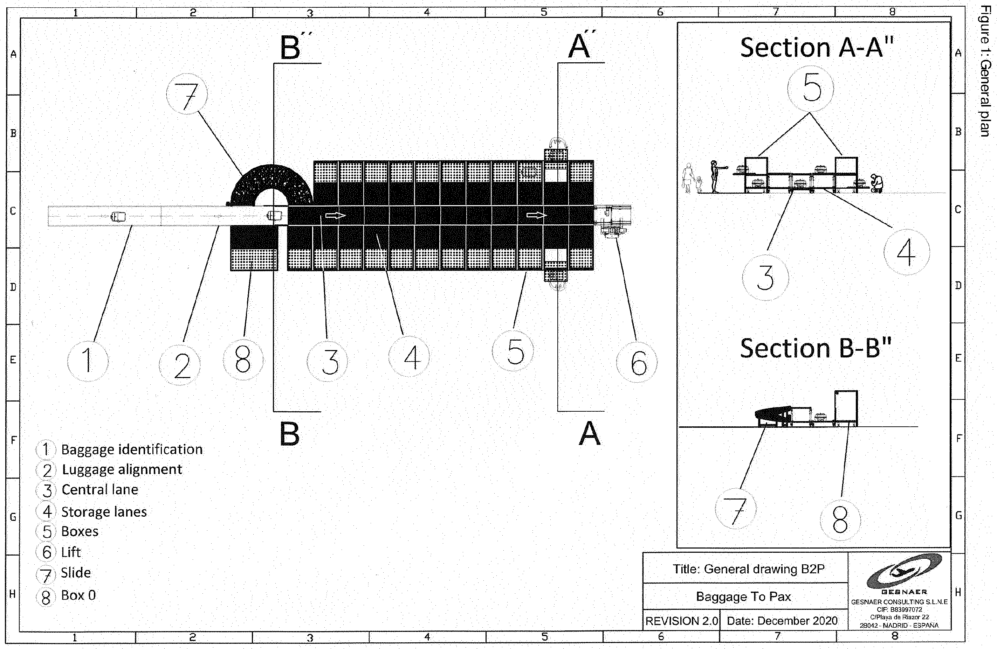

Figure 1: General plan of the invention
Figure 1, Item 1: Reading arc
Figure 1, Item 2: Alignment system
Figure 1, Item 3: Central warehouse
Figure 1, Item 4: Storage belt
Figure 1, Item 5: Boxes
Figure 1, Item 6: Elevator
Figure 1, Item 7: Slide
Figure 1, Item 8: Box 0
Figure 2: Process diagram

### DESCRIPTION OF THE INVENTION

The invention consists of a new integrated modular design of a package/baggage collection system that will replace the current conveyor belts as well as the technology involved in the process of tracking and delivering packages/luggage individually to each passenger. The delivery will be made through a set of delivery points, which may be a box, being a system by which the passenger picks up their package/luggage through an application that identifies them and assigns them a place of delivery individually.

This new integrated design is divided into three modules:

### MODULE 1: Baggage tracking from arrival at the baggage claim point to delivery to the passenger.

Includes the mechanical design of the new package/baggage delivery system; a set of mechanized mechanisms which may be conveyor belts, motorized transport balls or roller bearings, diverters, continuous traceable photoelectric cells, identification/monitoring system, hoppers , storage elements, etc . This system will complement the baggage arrival belts in the delivery hall, the place where passengers arrive to pick up their packages/luggage.

The system is initiated with a reading arc (Figure1, Item 1) which is comprised by conveyor belts/roller bearings/motorized transport balls through where luggage passes, at the same time it passes under a 180° arc comprised by fixed barcode/RFID readers. This point of the system is critical mainly because reading and identification of each of the packages/luggage occur, which is necessary in order to know the location and reconcile the data with the passenger. This process has a high reading percentage. Despite the high reading percentage, the baggage drop-off point with a reading error must be anticipated. This point is called box 0 (Figure 1, Item 8).

Subsequently, the packages/baggage go through an alignment system (Figure 1 , Item 2) for its proper placement in one of the main axes. It is used to facilitate its subsequent manipulation by the different elements of the B2P. This system is optional and it is not critical to the proper functioning of the invention.

From the alignment system, the luggage goes to the central warehouse . Said warehouse (Figure 1, Item 3) is a space of various compartments enabled for the temporary storage of packages/luggage awaiting their allocation in the different box or final delivery point. The movement of the packages/luggage within the central store will be made by conveyor belts/roller bearings/motorized transport balls. These transport conveyors form individual stations, whereby a piece of luggage will occupy a motorized station. Each station will have a sensor in order to know the location of each of the packages/luggage and if said station is occupied or free.

The luggage is moved from the central warehouse to the box-box or final delivery point assigned for collection, thorugh a horizontal diverter (Figure 1, Items 3 and 4). This is in charge of the horizontal transfer, whereby the packages/luggage from the central warehouse are deposited at each of the final delivery points or box. Another option to carry out this horizontal transfer is to use a mechanical stacker crane.

Delivery of packages/luggage is made in an individualized delivery point. A proposed option could be a box-box (Figure 1 , Item 5) being a system by which the passenger collects the package/luggage through their identification. The set of boxes consist of individual spaces where each of the packages/baggage are placed for their delivery to the corresponding passenger. The extraction consists of a surface with removable balls that allows the passenger to withdraw the luggage using extendable guides and rotate the suitcase to position the grip point in the most comfortable way for the passenger. The set of boxes are located in two levels for a greater capacity of the system, so that a column of boxes has two spaces. Before the final position of the packages/baggage, another space will exist where they will be diverted from the central warehouse. Therefore, in each column module there will be 4 suitcases (2 accessible to the passenger and 2 other positions behind), which contributes to the expansion of the storage capacity of the system. Depending on the necessary capacity for each airport or other transport terminals including train stations, bus stations , ports , etc. and the available space, the number of modules of the set of boxes is modifiable as well as their placement. In Figure 1 we see that there are placed a series of modules boxes each side of the central warehouse, making it the most functional distribution in most airports, but the system is flexible and modular and It allows to distribute the elements that comprise it in the most convenient way according to each case in each transport terminal .

At the end of the first level of the central warehouse, there is an automatic elevator (Figure 1, Item 6) used for transfering the packages/luggage to the upper levels of the central warehouse. It is also possible to use a motorized curve that communicates the different levels.

On the upper level, the packages/luggage are moved in the opposite direction to facilitate the feedback of the system with another elevator/curve through the use of gravity/motorized curve (Figure 1, Item 7) in order to lower the packages/luggage back to the lower level and start again the classification in the box.

All the elements of the system must be equipped with a set of PLC 's which will be responsible for management of all the movements so that the process is carried out successfully.

The type of communication of the reading arc will be carried out with the server through Arduino or a similar device, where each time a package/luggage with the tag passes , the arc reader's controller will communicate with the server and will make the server save the code of the label of the package/luggage in the server database together with the date and time of its reading. In this way, when passing through a photodetector connected to the PLC, we will know the code of the package/baggage through a database query from the PLC. The barcode/RFID reader will not be able to identify more than one tag at a time, which will allow us to control the baggage each time it passes through the photosensors that will be connected to the PLC.

Any unread package/baggage or unallowed dimensions by the system, will be separated and forwarded to a final delivery points which we call box 0 (Figure 1 , Item 8), said delivery points are located before the beginning of the central warehouse, on one or both sides of the central warehouse.

The system also includes a station for disinfecting the package/luggage before its delivered to the passenger. This system is optional and does not interfere with its normal operation.

### MODULE 2: PACKAGE/LUGGAGE IDENTIFICATION - PASSENGER

Module 2 manages the software and database of the packages/baggage and passengers, which send signals to the PLC's so that the new baggage system functions (module 1). This software will be activated when the system reads the barcode/RFID of the packages/luggage when passing through the detector arc, collecting the data of the package/baggage. When the passenger arrives at the baggage claim hall, the passenger will need to identify themselves with their package/baggage code through a interactive screen stand or application, which indicates the passenger the exact place in the set boxes where their luggage is located.

The system includes an electronic management system of the invention, interactive screen stand, information screen and other mechanisms and systems that allow monitoring and autonomous operation of the device.

The information screen indicates to the passenger that their package/luggage has arrived and that they must proceed to identify themselves.

The interactive screen stand consists of a touch screen and a code reader. The screen is the method of connection with the passenger, which indicates the steps to follow in order to access their luggage. Optionally, the passenger will be allowed to download an application for their mobile phone from which they will be able to do the same process and stay updated at all times of the status of the delivery of their package/luggage.

The interface end user is developed under any environment with WebService connectivity with the database where all the records of the PLC are stored. In this way we will have a direct connection and know the state of the packages/luggage.

All packages/luggage that are not claimed by any passenger will be communicated to the ground handling company to deliver them as lost packages/luggage. The ground handling company will assign a special code to collect all these luggage.

### MODULE 3: PROCESS CONTROL

Module 3 is in charge of using the information collected through a control software tool for the visualization and treatment of all the real time and "historical" data that are processed in the new B2P suitcase system and that must be perfectly recorded in a database.

Real time and historical data will be used by the airport operator and the company that request it. With this software it will be possible to visualize and treat all data that has been processed by the system: date/arrival time of packages/luggage to B2P, date/arrival time of the passenger to B2P, date/identification time of passenger - packages/luggage, number of box where the bag is delivered, date/delivery time of packages/luggage and unidentified, undelivered and stored packages/luggage. In addition, real time and historical information of the perfomance of each of the mechanisms of the system will be provided, in order to facilitate its maintenance.

The data processing can be exported in Excel format and/or similar, in order to facilitate data visualization as well as to be able to perform searches and calculations, such as useful calculations made by the airport operator, airline or handling company.

## Claims

1. A delivery method to the corresponding passenger of packages/luggage in an individualized and modular way at an airport or other transport terminals, the method comprising:
• Reading and identification of each of the packages/luggage;
• Identifying the passenger through an interactive screen stand or mobile application;
• Reconciling the packages/luggage data with the passenger data;
• Positioning the package/luggage on an individual box (5) for delivery, whereby the individual boxes (5) are arranged in a modular way in a plurality of columns each with two levels;
• Indication to the passenger of the steps to follow in order to access their luggage; and
• Delivery of the packages/luggage by opening the individual box (5) to the passenger after successful identification;
wherein the positioning of the package/luggage on each individual box (5) is achieved by
• continuous circulation of the packages/luggage by means of a central warehouse (3) configured in the same two levels as the individual boxes (5) wherein the two levels are connected by motorised curves or automatic elevators that allow the luggage to be raised and lowered from one level to the other;
• Temporary storage and perpendicular and horizontal diversion of the packages/luggage from the central warehouse (3) towards the final delivery boxes (5);
• Temporary storage of the diverted packages/luggage in spaces or storage belts (4) before their final positioning in the final delivery individual boxes (5)

2. The method according to claim 1 wherein the positioning of the package/luggage on each individual box (5) is further achieved by returning the packages/luggage from any final delivery box (5) to the central warehouse (3) for transportation to a different final delivery box (5).

3. The method according to claim 1 or 2 wherein the reading and identification of each package/luggage is carried out through the usage of a barcode, QR code or RFID.

4. The method according to claims 1-3 **characterized in that** the luggage is delivered to the passenger, by opening the individual box to the passenger after successful identification by any of the following:
• Holding a receipt of the luggage;
• Ergonomic recognition of the passenger, such as by face recognition;
• Introducing the code of a passenger in a suitable interface;
• Recognition of an identification document of the passenger.

5. The method according to any of the preceding claims **characterized in that** positioning the package/luggage on the individual box for delivery is performed by means of modular mechanized elements to the designated point, where the modular mechanized elements can consist of diverters, and/or level changes, and/or descent slides, and/or belts, rollers, balls or conveyors.

6. The method according to claim 4 in which granting access to the individual box to the passenger takes place at a specified time for delivery.

7. The method according to claims 1-5 in which positioning the package/luggage on the individual box for delivery is performed by a stacker crane instead of belts, rollers, balls or conveyors.

8. The method according to any of the previous claims wherein any unread package/baggage or un-allowed dimensions by the system, will be separated and forwarded to a final delivery point referred to as Box 0 (8), located before the beginning of the central warehouse (3).

9. An integrated system for individualized distribution and storage of packages or luggage at an airport or other transport terminals including train stations, bus stations or ports comprising
• A reading arc (1) comprising a plurality of barcode/RFID readers;
• A passenger identification interactive screen stand or mobile application;
• A mechanism that allows the positioning of the package or luggage in an individual box (5) for delivery comprising
∘ A central warehouse (3) configured as a plurality of modular mechanized elements for the transportation and temporary storage of the packages/luggage awaiting their allocation in the different individual boxes;
∘ A plurality of spaces or storage belts (4) configured as a plurality of modular mechanized elements for the transportation and temporary storage of the packages/luggage between the central warehouse (3) and the final delivery points of the packages/luggage;
∘ Horizontal diverters for perpendicular moving packages or luggage from the central warehouse (3) towards the final delivery points or individual boxes (5);
• A plurality of final delivery points or individual boxes (5) arranged in the device in a modular way in a plurality of columns each with two levels; each individual box (5) is fitted with means of access restriction so that each individual box is only opened after successful identification of the passenger.
wherein each final delivery point or individual box (5)
- is connected to the central warehouse (3) via a space or storage belt (4); and
- has a system to return the packages/luggage to the to the central warehouse (3);
and wherein
the central warehouse (3) is configured in two levels being the same two levels as the individual boxes (5) wherein the two levels are connected by motorised curves or automatic elevators that allow the luggage to be raised and lowered from one level to the other.

10. The system according to claim 9, further comprising an alignment system for proper placement in one of the main axes of the packages/baggage before entering the central warehouse (3).

11. The system according to claims 9 or 10, wherein the movement of the packages/luggage within the central warehouse (3) is made by conveyor belts/roller bearings/motorized transport balls; these transport conveyors form individual stations, whereby a piece of luggage will occupy a motorized station and wherein each station has a sensor in order to know the location of each of the packages/luggage and if said station is occupied or free.

12. The system according to any of claims 9-11, wherein the movement of the packages/luggage from the central warehouse (3) to the final delivery points or boxes (5) is carried out by means of a horizontal diverter or a mechanical stacker crane.

13. The system according to any of claims 9-12 wherein each individual box (5) is fitted with a removable tray with extensible guides and balls that allow the luggage to be rotated to its most comfortable position for the passenger.

14. The system according to any of claims 9-13 wherein it further comprises screens with general information for the passenger indicating the status of the package or luggage in order to carry out the identification process and subsequent delivery.

15. The system according to any of claims 9-14 wherein it further comprises an electronic system to manage the device, interactive screen stand and display information that allows monitoring and autonomous performance of the device.

16. The system according to any of claims 9-15 wherein it further comprises one electronic system of data logging that allows viewing past events regarding the performance and use of the invention with the purpose of the analysis and statistics.

17. The system according to any of claims 9-16 wherein it further comprises a disinfecting station for the package/baggage before delivery to the passenger.

## Patentansprüche

1. Verfahren zum individualisierten und modularen Liefern von Paketen/Gepäck an den entsprechenden Fahrgast an einem Flughafen oder an anderen Verkehrsterminals, wobei das Verfahren Folgendes umfasst:
• Lesen und Identifizieren jedes Pakets/Gepäckstücks,
• Identifizieren des Fahrgasts über einen interaktiven Bildschirmständer oder eine mobile Anwendung,
• Abstimmen der Paket-/Gepäckdaten mit den Fahrgastdaten,
• Positionieren des Pakets/Gepäcks auf einer Einzelbox (5) zur Lieferung, wobei die Einzelboxen (5) modular in einer Vielzahl von Kolonnen mit jeweils zwei Ebenen angeordnet sind,
• Angeben gegenüber dem Fahrgast der Schritte, die zu befolgen sind, um Zugriff auf sein Gepäck zu erhalten, und
• Liefern der Pakete/des Gepäcks an den Fahrgast nach erfolgreicher Identifizierung durch Öffnen der Einzelbox (5),
wobei das Positionieren des Pakets/Gepäcks auf jeder Einzelbox (5) durch Folgendes erreicht wird:
• kontinuierlicher Umlauf der Pakete/des Gepäcks durch ein Zentrallager (3), das in den gleichen zwei Ebenen wie die Einzelboxen (5) ausgestaltet ist, wobei die beiden Ebenen durch motorisierte Kurven oder automatische Aufzüge verbunden sind, dank derer das Gepäck von einer Ebene zu der anderen angehoben und abgesenkt werden kann,
• vorübergehende Lagerung und senkrechte und horizontale Umlenkung der Pakete/des Gepäcks von dem Zentrallager (3) zu den Endlieferboxen (5) hin,
• vorübergehende Lagerung der umgelenkten Pakete/des umgelenkten Gepäcks in Räumen oder auf Lagerbändern (4) vor ihrer endgültigen Positionierung in den einzelnen Endlieferboxen (5).

2. Verfahren nach Anspruch 1, wobei das Positionieren des Pakets/Gepäcks auf jeder Einzelbox (5) ferner durch Zurückführen der Pakete/des Gepäcks von einer beliebigen Endlieferbox (5) zu dem Zentrallager (3) zum Transport zu einer anderen Endlieferbox (5) erreicht wird.

3. Verfahren nach Anspruch 1 oder 2, wobei das Lesen und Identifizieren jedes Pakets/Gepäcks durch die Verwendung eines Barcodes, QR-Codes oder RFID durchgeführt wird.

4. Verfahren nach Anspruch 1 - 3, **dadurch gekennzeichnet, dass** das Gepäck an den Fahrgast geliefert wird, indem die Einzelbox für den Fahrgast geöffnet wird, nachdem die Identifizierung durch Beliebiges von Folgendem durchgeführt worden ist:
• Besitz eines Gepäckscheins,
• ergonomische Erkennung des Fahrgasts, z. B. durch Gesichtserkennung,
• Eingeben des Codes eines Fahrgasts in eine geeignete Schnittstelle,
• Erkennen eines Ausweisdokuments des Fahrgasts.

5. Verfahren nach einem der vorhergehenden Ansprüche, **dadurch gekennzeichnet, dass** das Positionieren des Pakets/Gepäcks auf der Einzelbox zur Lieferung mittels modularer mechanischer Elemente bis zu dem Bestimmungsort erfolgt, wobei die modularen mechanischen Elemente aus Umlenkern und/oder Niveauänderungen und/oder nach unten gehenden Rutschen und/oder Bändern, Rollen, Kugeln oder Förderern bestehen können.

6. Verfahren nach Anspruch 4, bei dem das Gestatten von Zugriff auf die Einzelbox für den Fahrgast zu einem vorgegebenen Zeitpunkt für die Lieferung erfolgt.

7. Verfahren nach den Ansprüchen 1 - 5, bei dem das Positionieren des Pakets/Gepäcks auf der Einzelbox zur Lieferung anstelle von Bändern, Rollen, Kugeln oder Förderern durch einen Stapelkran durchgeführt wird.

8. Verfahren nach einem der vorhergehenden Ansprüche, wobei jedes nicht gelesene Paket/Gepäck oder jegliche von dem System nicht erlaubte Abmessungen abgetrennt und an einen Endlieferpunkt, der als Box 0 (8) bezeichnet wird und vor dem Beginn des Zentrallagers (3) angeordnet ist, weitergeleitet werden.

9. Integriertes System zur individualisierten Verteilung und Lagerung von Paketen oder Gepäck an einem Flughafen oder anderen Verkehrsterminals, einschließlich Bahnhöfen, Busbahnhöfen oder Häfen, umfassend
• einen Lesebogen (1), der eine Vielzahl von Barcode-/RFID-Lesegeräten umfasst,
• einen interaktiven Bildschirmständer oder eine mobile Anwendung zur Identifizierung von Fahrgästen,
• einen Mechanismus, der die Positionierung des Pakets oder Gepäcks in einer Einzelbox (5) zur Lieferung gestattet, umfassend:
∘ein Zentrallager (3), das als eine Vielzahl von modularen mechanischen Elementen für den Transport und die vorübergehende Lagerung der Pakete/des Gepäcks, die auf ihre Zuordnung in den verschiedenen Einzelboxen warten, ausgestaltet ist,
∘ eine Vielzahl von Räumen oder Lagerbänder (4), die als eine Vielzahl von modularen mechanischen Elementen zum Transport und vorübergehender Lagerung der Pakete/des Gepäcks zwischen dem Zentrallager (3) und den Endlieferpunkten der Pakete/des Gepäcks ausgestaltet sind,
∘ horizontale Umlenker für das senkrechte Bewegen von Paketen oder Gepäck von dem Zentrallager (3) zu den Endlieferpunkten oder Einzelboxen (5),
• eine Vielzahl von Endlieferpunkten oder Einzelboxen (5), die modular in der Vorrichtung in einer Vielzahl von Kolonnen mit jeweils zwei Ebenen angeordnet sind, wobei jede Einzelbox (5) mit Zugriffsbeschränkungsmitteln ausgestattet ist, so dass jede Einzelbox erst nach erfolgreicher Identifizierung des Fahrgasts geöffnet wird,
wobei jeder Endlieferpunkt oder jede Einzelbox (5)
- über einen Raum oder ein Lagerband (4) mit dem Zentrallager (3) verbunden ist und
- ein System zur Rückführung der Pakete/des Gepäcks an das Zentrallager (3) hat, und wobei
das Zentrallager (3) in zwei Ebenen ausgestaltet ist, die die gleichen zwei Ebenen wie die Einzelboxen (5) sind, wobei die beiden Ebenen durch motorisierte Kurven oder automatische Aufzüge verbunden sind, die ein Anheben und Absenken des Gepäcks von einer Ebene zu der anderen gestatten.

10. System nach Anspruch 9, ferner umfassend ein Ausrichtsystem zur korrekten Platzierung in einer der Hauptachsen der Pakete/des Gepäcks vor dem Eintritt in das Zentrallager (3).

11. System nach Anspruch 9 oder 10, wobei die Bewegung der Pakete/des Gepäcks innerhalb des Zentrallagers (3) durch Förderbänder/Rollenlager/motorisierte Transportkugeln erfolgt, wobei diese Transportförderer einzelne Stationen bilden, wobei ein Gepäckstück eine motorisierte Station belegt und wobei jede Station einen Sensor aufweist, um den Ort jedes der Pakte/der Gepäckstücke zu kennen und ob die Station belegt oder frei ist.

12. System nach einem der Ansprüche 9 - 11, wobei die Bewegung der Pakete/des Gepäcks von dem Zentrallager (3) zu den Endlieferpunkten oder -boxen (5) mittels eines horizontalen Umlenkers oder eines mechanischen Stapelkrans durchgeführt wird.

13. System nach einem der Ansprüche 9 - 12, wobei jede Einzelbox (5) mit einer entfernbaren Schale mit ausfahrbaren Führungen und Kugeln ausgestattet ist, dank derer das Gepäck in seine für den Fahrgast bequemste Position gedreht werden kann.

14. System nach einem der Ansprüche 9 - 13, ferner umfassend Bildschirme mit allgemeinen Informationen für den Fahrgast, die den Status des Pakets oder Gepäcks angeben, um den Identifizierungsvorgang und die anschließende Lieferung durchzuführen.

15. System nach einem der Ansprüche 9 - 14, ferner umfassend ein elektronisches System zum Verwalten der Vorrichtung, des interaktiven Bildschirmständers und der Anzeigeinformationen, das Überwachung und autonomes Funktionieren der Vorrichtung gestattet.

16. System nach einem der Ansprüche 9 - 15, ferner umfassend ein elektronisches System zur Datenprotokollierung, das das Einsehen vergangener Ereignisse bezüglich der Leistungsfähigkeit und Verwendung der Erfindung mit dem Zweck der Analyse und Statistik gestattet.

17. System nach einem der Ansprüche 9 - 16, ferner umfassend eine Desinfizierungsstation für das Paket/Gepäck vor der Lieferung an den Fahrgast.

## Revendications

1. Procédé de livraison au passager correspondant de paquets/bagages, de manière individualisée et modulaire, dans un aéroport ou d'autres gares de transport, le procédé comprenant :
• la lecture et l'identification de chacun des paquets/bagages ;
• l'identification du passager par le biais d'une borne interactive à écran ou d'une application mobile ;
• la vérification de la concordance des données des paquets/bagages avec les données du passager ;
• la disposition du paquet/bagage dans un compartiment individuel (5) pour sa livraison, les compartiments individuels (5) étant agencés de manière modulaire en une pluralité de colonnes comportant deux niveaux chacune ;
• l'indication au passager des étapes à suivre afin d'accéder à ses bagages ; et
• la livraison des paquets/bagages par l'ouverture du compartiment individuel (5) pour le passager à la suite d'une identification réussie ;
dans lequel la disposition du paquet/bagage dans chaque compartiment individuel (5) est accomplie par
• la mise en circulation en continu des paquets/bagages au moyen d'un entrepôt central (3) conçu avec les deux mêmes niveaux que les compartiments individuels (5), les deux niveaux étant raccordés par des courbes motorisées ou des élévateurs automatiques qui permettent d'élever et d'abaisser les bagages d'un niveau à l'autre ;
• l'entreposage temporaire et le déroutage perpendiculaire et horizontal des paquets/bagages de l'entrepôt central (3) vers les compartiments de livraison finaux (5) ;
• l'entreposage temporaire des paquets/bagages déroutés dans des espaces ou sur des courroies d'entreposage (4) avant leur disposition finale dans les compartiments individuels de livraison finaux (5).

2. Procédé selon la revendication 1, dans lequel la disposition du paquet/bagage dans chaque compartiment individuel (5) est accomplie, en outre, par le renvoi des paquets/bagages d'un compartiment de livraison final (5) quelconque à l'entrepôt central (3) pour leur transport vers un compartiment de livraison final (5) différent.

3. Procédé selon la revendication 1 ou 2, dans lequel la lecture et l'identification de chaque paquet/bagage sont effectuées au moyen d'un code-barres, d'un code-barres 2D ou d'une identification RF.

4. Procédé selon les revendications 1 à 3, **caractérisé en ce que** les bagages sont livrés au passager par l'ouverture du compartiment individuel pour le passager à la suite d'une identification réussie résultant de l'un quelconque des événements suivants :
• la détention d'un reçu associé aux bagages ;
• la reconnaissance ergonomique du passager, par exemple reconnaissance faciale ;
• l'introduction du code d'un passager dans une interface appropriée ;
• la reconnaissance d'un document d'identification du passager.

5. Procédé selon l'une quelconque des revendications précédentes, **caractérisé en ce que** la disposition du paquet/bagage dans le compartiment individuel pour sa livraison est effectuée au moyen d'éléments mécanisés modulaires au point désigné, les éléments mécanisés modulaires pouvant se présenter sous la forme de dérouteurs, et/ou de dispositifs de changement de niveau, et/ou de glissières de descente, et/ou de courroies, de rouleaux, de billes ou de transporteurs.

6. Procédé selon la revendication 4, dans lequel l'accès au compartiment individuel est accordé au passager à une heure spécifiée pour la livraison.

7. Procédé selon les revendications 1 à 5, dans lequel la disposition du paquet/bagage dans le compartiment individuel pour sa livraison est effectuée par un pont roulant gerbeur au lieu de courroies, de rouleaux, de billes ou de transporteurs.

8. Procédé selon l'une quelconque des revendications précédentes, dans lequel un paquet/bagage non lu ou des dimensions non autorisées par le système, seront séparés et transférés à un point de livraison final appelé Compartiment 0 (8), situé avant la partie initiale de l'entrepôt central (3).

9. Système intégré pour la distribution et l'entreposage individualisés de paquets ou de bagages dans un aéroport ou d'autres gares de transport comprenant des gares ferroviaires, des gares routières ou des ports, comprenant
• un arc de lecture (1) comprenant une pluralité de lecteurs de codes-barres/d'identification RF ;
• une borne interactive à écran ou application mobile d'identification de passager ;
• un mécanisme permettant la disposition du paquet ou bagage dans un compartiment individuel (5) pour sa livraison, comprenant
∘ un entrepôt central (3) conçu sous la forme d'une pluralité d'éléments mécanisés modulaires pour le transport et l'entreposage temporaire des paquets/bagages en attente d'attribution aux différents compartiments individuels ;
∘ une pluralité d'espaces ou de courroies d'entreposage (4) conçus sous la forme d'une pluralité d'éléments mécanisés modulaires pour le transport et l'entreposage temporaire des paquets/bagages entre l'entrepôt central (3) et les points de livraison finaux des paquets/bagages ;
∘ des dérouteurs horizontaux pour déplacer perpendiculairement des paquets ou bagages de l'entrepôt central (3) vers les points de livraison finaux ou compartiments individuels (5) ;
• une pluralité de points de livraison finaux ou compartiments individuels (5) agencés dans le dispositif de manière modulaire en une pluralité de colonnes comportant deux niveaux chacune ; chaque compartiment individuel (5) étant équipé d'un moyen de restriction d'accès de sorte que chaque compartiment individuel ne soit ouvert qu'à la suite d'une identification réussie du passager,
dans lequel chaque point de livraison final ou compartiment individuel (5)
- est raccordé à l'entrepôt central (3) par le biais d'un espace ou d'une courroie d'entreposage (4) ; et
- comporte un système pour le renvoi des paquets/bagages à l'entrepôt central (3) ; et dans lequel
l'entrepôt central (3) est conçu avec deux niveaux qui sont les mêmes deux niveaux que ceux des compartiments individuels (5), les deux niveaux étant raccordés par des courbes motorisées ou des élévateurs automatiques qui permettent d'élever et d'abaisser les bagages d'un niveau à l'autre.

10. Système selon la revendication 9, comprenant, en outre, un système d'alignement servant au positionnement correct sur l'un des axes principaux des paquets/bagages avant leur entrée dans l'entrepôt central (3).

11. Système selon les revendications 9 ou 10, dans lequel le déplacement des paquets/bagages à l'intérieur de l'entrepôt central (3) est réalisé par des courroies transporteuses/des roulements/des billes de transport motorisées ; ces transporteurs formant des postes individuels, de sorte qu'un bagage occupera un poste motorisé, et chaque poste comportant un capteur afin de connaître l'emplacement de chacun des paquets/bagages et de savoir si ledit poste est occupé ou libre.

12. Système selon l'une quelconque des revendications 9 à 11, dans lequel le déplacement des paquets/bagages de l'entrepôt central (3) aux points de livraison finaux ou compartiments (5) est réalisé au moyen d'un dérouteur horizontal ou d'un pont roulant gerbeur mécanique.

13. Système selon l'une quelconque des revendications 9 à 12, dans lequel chaque compartiment individuel (5) est équipé d'un bac amovible comportant des guides extensibles et des billes permettant de tourner le bagage de façon à le placer dans la position la plus commode pour le passager.

14. Système selon l'une quelconque des revendications 9 à 13, comprenant, en outre, des écrans avec des informations générales pour le passager indiquant l'état du paquet ou bagage afin d'accomplir le procédé d'identification et la livraison ultérieure.

15. Système selon l'une quelconque des revendications 9 à 14, comprenant, en outre, un système électronique pour gérer le dispositif, une borne interactive à écran et des informations d'affichage permettant le contrôle et la mise en œuvre autonome du dispositif.

16. Système selon l'une quelconque des revendications 9 à 15, comprenant, en outre, un système électronique d'enregistrement de données permettant de visionner des événements antérieurs du point de vue de la mise en œuvre et de l'utilisation de l'invention à des fins d'analyse et de recueil de statistiques.

17. Système selon l'une quelconque des revendications 9 à 16, comprenant, en outre, un poste de désinfection pour le paquet/bagage avant sa livraison au passager.
